# NEUE EUROPÄISCHE PATENTSCHRIFT

(11) **EP 0 349 975 B2**
(45) Veröffentlichungstag und Bekanntmachung des Hinweises auf die Entscheidung über den Einspruch: **18.12.1996**
(45) Hinweis auf die Patenterteilung: 13.10.1993
(21) Anmeldenummer: 89112187.3
(22) Anmeldetag: 04.07.1989
(51) Int. Cl.: G01G 11/12

(54) **Verfahren zur Überwachung und Regelung eines Banddosierers oder einer Dosierbandwaage und Vorrichtung zur Durchführung des Verfahrens**
Process for checking and controlling of a conveyor belt feeder or a conveyor belt weight feeder and processing apparatus
Procédé pour le contrôle et réglage d'une bande de dosage ou d'une balance de dosage sous forme d'une bande et dispositif pour ce procédé

(30) Priorität: 08.07.1988 DE 3823191
(43) Veröffentlichungstag der Anmeldung: 10.01.1990
(73) Patentinhaber: Pfister GmbH, 86165 Augsburg (DE)
(72) Erfinder: Häfner, Hans Wilhelm, D-8890 Aichach-Walchshofen (DE)
(74) Vertreter: Kahler, Kurt, Dipl.-Ing.

(56) Entgegenhaltungen:
- DE-A- 2 151 264
- DE-A- 2 355 905
- DE-A- 2 936 344
- DE-B- 1 086 449
- FR-A- 2 224 051
- GB-A- 1 397 879
- LU-A- 65 749
- US-A- 4 437 563
- Prospekt F9100, Schenck (DE), Mai 1988, "Kontinuierlich Wägen und Dosieren"
- N.G. Müller, "Kontinuierlich wägen und gravimetrisch dosieren" in chemie-anlagen + verfahren, Nr. 11, November 1985
- Kochsiek, Handbuch des Wägens, Braunschweig (DE) 1985, Seiten 322-331

## Beschreibung

Die Erfindung betrifft ein Verfahren zur Überwachung und Regelung eines Banddosierers oder einer Dosierbandwaage gemäß den oberbegrifflichen Merkmalen des Patentanspruches 1 sowie eine Vorrichtung zur Durchführung des Verfahrens erster Teil Anspruch 7.

Bei derartigen Waagen wird ein Förderband über zwei im Abstand angeordnete Walzen geführt, von denen eine mittels eines Antriebsmotors drehzahlveränderlich angetrieben wird. Da die geförderte Gutmenge sowohl beim volumetrischen (z.B. konstante Aufschütthöhe) als auch beim gravimetrischen (Wiegung der Momentanmasse auf dem Förderband bzw. einem Teilbereich) Meßverfahren abhängig ist von der Umlaufgeschwindigkeit des Förderbandes, wird diese Umlaufgeschwindigkeit anhand der Drehzahl des Antriebsmotors z.B. mittels eines Tachogenerators bestimmt und der Auswerteelektronik zugeführt.

Ein derartiges Verfahren ist aus der DE-OS 21 02 147 bekannt, bei dem zur Regelung eines Schüttgutstromes die Bandbelastung mit der Bandgeschwindigkeit multipliziert wird. Zur Messung der Bandgeschwindigkeit dient dabei ein die Drehzahl der Umlenkwalze über ein Nutenrad erfassender berührungsloser Impulsgeber.

Abhängig von der Höhe der jeweiligen eingestellten Umlaufgeschwindigkeit und der Belastung, sowie der Temperatur des Förderbandes ergibt sich jedoch an der Antriebs- und/oder Umlenkwalze ein Schlupf, der zu erheblichen Ungenauigkeiten in der Messung und damit Einhaltung der gewählten Dosiermenge führen kann. Da diese verschiedensten Einflüsse für die Dosiergenauigkeit eine bedeutende Rolle spielen und sich gegenseitig beeinflussen oder verstärken können, läßt sich dieser Schlupf bisher kaum exakt feststellen bzw. entsprechend exakt durch Drehzahlerhöhung korrigieren.

Es ist zwar bekannt auf die zweite, nicht angetriebene Walze einen zweiten Tachogenerator zur montieren und desseen Ausgangssignal mit dem ersten Tachogenerator des Antriebsmotors in Beziehung zu setzen (DE-Z: Eickhoff-Mitteilungen, Bergbau 1981, S.58/59). Ein derartiger zweiter Tachogenerator ist jedoch sehr aufwendig und berücksichtigt nicht alle Einflußparameter, beispielsweise nicht die Förderbanddehnung, die zudem wiederum von der Umgebungstemperatur abhängig ist. Diese Nachteile gelten auch für die Geschwindigkeitserfassung über die Walzendrehzahl, da durch auftretenden Schlupf an der zweiten, nicht angetriebenen Umlenkwalze die Messung der Umfangsgeschwindigkeit verfälscht werden kann. Zudem ist dieses Erfassungsverfahren durch gesonderte Nutenräder und Übersetzungsgetriebe, wie bei der DE-OS 21 02 147, aufwendig.

Aus chemie-anlagen + verfahren, Nr. 11, November 1985, N. G. Müller, ist ein aus Band angeordnetes Reibrad zur Erfassung der Bandgeschwindigkeit bekannt.

Aus der GB-PS 13 97 879 ist weiterhin bekannt, bei einer Dosierbandwaage an dem Förderband jeweils eine Markierung (Kerbe, Loch oder Magneten/radioaktives Material) vorzusehen. Jedoch dient diese einzige Markierung jeweils nur der Erfassung eines kompletten Umlaufes des Förderbandes und kann somit die unter Schlupf variierende Bandgeschwindigkeit während eines Umlaufes nicht exakt erfassen. Die Bandgeschwindigkeit wird dabei von einem gesonderten Zackenrad bzw. einer Meßrolle mit Zackenrad und magnetischer Abtastung durch Sensoren auf gesonderte Weise erfaßt. Die Markierung am Förderband dient dabei lediglich der Rückstellung bei jedem kompletten Umlauf. Damit ist diese Konstruktion aufgrund der gesonderten Geschwindigkeitserfassung über die Zackenräder ebenso aufwendig und fehlerbehaftet wie bei der DE-OS 21 02 147. Dies gilt auch für die DE-AS 10 86 449, bei der zur Regelung der Bandgeschwindigkeit eine aufwendige proportional zur Bandgeschwindigkeit rotierende Magnettrommel vorgesehen ist
Demzufolge liegt der Erfindung die Aufgabe zugrunde, die Meßgenauigkeit bei Dosierbandwaagen unter Ausschaltung der verschiedensten Fehlereinflüsse auf einfache Weise zu erhöhen.

Zur Lösung der Aufgabe wird ein Verfahren nach den kennzeichnenden Merkmalen des Patentanspruches 1 und eine Vorrichtung zur Durchführung des Verfahrens gemäß den kennzeichnenden Merkmalen des Patentanspruches 7 vorgeschlagen.

Durch die Erfassung der Umlaufgeschwindigkeit des Förderbandes unmittelbar an diesem selbst kann die Bandgeschwindigkeit schlupffrei gemessen werden und die ermittelten Werte sodann mit der eingegebenen Soll-Antriebsdrehzahl bzw. Umlaufgeschwindigkeit in Beziehung gesetzt werden. Damit können Fehlereinflüsse zuverlässig festgestellt und korrigiert, sowie selbst sich gegenseitig beeinflußende Parameter sicher als Störgröße erkannt und ausgeschaltet werden.

In vorteilhafter Ausgestaltung erfolgt die Messung der Umlaufgeschwindigkeit innerhalb des Verfahrens berührungslos. Vorteilhaft ist weiterhin, wenn die gemessenen Werte der Umlaufgeschwindigkeit nach der Messung und noch vor dem Vergleich aufsummiert (gemittelt) und/oder zwischengespeichert werden, da hierdurch geringfügige Schwankungen während eines Umlaufes ausgeglichen werden können.

Eine weitere vorteilhafte Ausgestaltung ist der dem Vergleich nachgeschaltete Verfahrensschritt einer Störungsanzeige bzw. Abschaltung des Förderbandes bei einer unzulässigen Überlast, die durch das erfindungsgemäße Verfahren durch Vergleich zwischen Soll- und Istgeschwindigkeit feststellbar ist.

Selbst ein Schräglauf oder eine Seitenverschiebung des Förderbandes von der ursprünglichen Laufrichtung ist durch die damit verbundene seitliche Abweichung der Markierungen von der ortsfesten Abtastvorrichtung feststellbar und durch eine Seitenverschiebung oder Verschwenkung einer der beiden Walzen korrigierbar.

Vorteilhafte Ausgestaltungen des Vorrichtungsanspruches sind Gegenstand der darauffolgenden Unteransprüche und in der nachfolgenden Beschreibung zweier Ausführungsbeispiele näher erläutert. In der Zeichnung zeigt:
- Fig. 1: eine Dosierbandwaage nach dem volumetrischen Meßprinzip in Seitenansicht (Banddosierer),
- Fig. 2: eine Förderbandwaage nach dem gravimetrischen Meßprinzip in Seitenansicht,
- Fig. 3: eine Draufsicht auf eine Förderbandwaage gemäß Fig. 2.

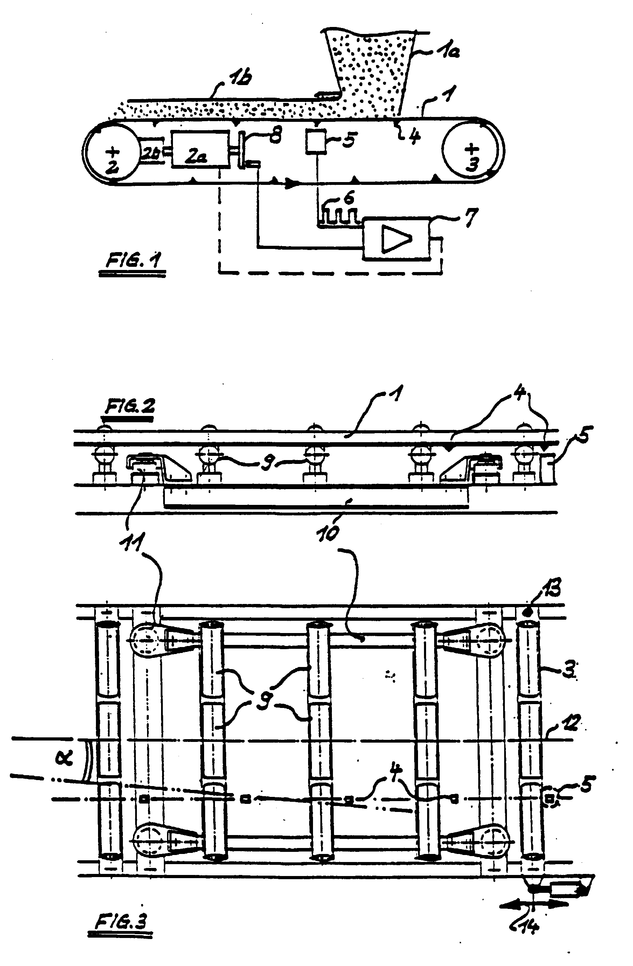

Fig. 1 zeigt eine Dosierbandwaage in der Seitenansicht, dessen Förderband 1 um eine Antriebswalze 2 und eine Umlenkwalze 3 umläuft. Das zu dosierende Gut gelangt aus einem Bunker 1a über der Dosierbandwaage auf das Förderband 1 und wird dort als Dosiergut 1b mit konstanter Schütthöhe weitertransportiert, so daß sich aus der Umlaufgeschwindigkeit des Förderbandes 1 und dem Auslaßquerschnitt des Bunkers 1a die Dosiermenge rechnerisch bestimmen läßt.

Die Antriebswalze 2 wird von einem Antriebsmotor 2a und einem Getriebe 2b angetrieben. Das Förderband 1 weist erfindungsgemäß an seiner Innenseite Markierungen 4 auf, die von einer Abtastvorrichtung 5 erfaßt werden und die Abtastsignale 6 hier in Form von Rechtecksignalen, einem Vergleicher 7 zugeleitet werden. Die Markierungen 4 sind z.B. als Erhöhungen ausgebildet, die die jeweiligen Abtastsignale 6 in Abhängigkeit von der Umlaufgeschwindigkeit des Förderbandes 1 liefern. Die Markierungen 4 können jedoch auch als Vertiefungen im Förderband oder als eingelassene magnetische Signalgeber z.B. einvulkanisierte magnetische Teilchen oder dergleichen ausgeführt sein. Entsprechend dem gewählten Markierungsprinzip, wie magnetisch, optisch, kapazitiv usw. ist die Abtastvorrichtung 5 angepaßt. Von den Markierungen 4 ist eine größere Anzahl an dem Förderband 1 vorgesehen, die im gleichmäßigen Abstand voneinander angeordnet sind, so daß Geschwindigkeitsschwankungen Laufzeitänderungen von Markierungen 4 zur jeweils nächsten erfaßt werden.

Im Vergleicher 7 wird das Abtastsignal 6 mit dem Signal von einem Tachogenerator 8 verglichen, der die Antriebsdrehzahl des Antriebsmotors 2a mißt. Tritt durch den Einfluß der Parameter, Bandlast, Antriebsdrehzahl, Temperatur usw. ein Schlupf an der Antriebswalze 2 auf, so wird dieser durch die Differenz zwischen Tachogeneratorsignal und Abtastsignal 6 erkannt. Entsprechend der Abweichung kann nunmehr die Antriebsdrehzahl nachgeregelt werden, so daß die gewünschte Fördermenge unter Berücksichtigung des Schlupfes eingehalten wird.

Bemerkenswert ist weiterhin, daß der hier beschriebene Tachogenerator 8 zur Durchführung des Verfahrens nicht unbedingt notwendig ist, da die über die Abtastvorrichtung 5 ermittelte tatsächliche Umfangsgeschwindigkeit allein ausreicht, um die gewünschte Dosiermenge zu berechnen. In dieser Ausführung ohne aufwendige(n) Tachogenerator(en) 8 ist diese Dosierbandwaage gegenüber der als Stand der Technik beschriebenen mit zwei Tachogeneratoren besonders einfach in der Herstellung.

Wird jedoch ein Tachogenerator 8 wie hier beschrieben, verwendet, läßt sich der jeweils vorliegende Schlupf aus dem Vergleich zwischen Tachogeneratorsignal und Abtastsignal 6 ermitteln, so daß die Betriebsbedingungen der Dosierbandwaage überwacht werden können. Tritt beispielsweise ein Schlupf von mehreren Prozent auf, so deutet dies auf eine Überlastung der Dosierbandwaage oder andere störende Faktoren wie eine Verschmutzung der Antriebswalze 2 hin, so daß dieser Betriebszustand der Bedienungsperson als Störung angezeigt werden kann. Bei noch höherem festgestellten Schlupf, der langfristig zu einer Beschädigung des Förderbandes 1 führen könnte, kann das Förderband 1 auch abgeschaltet werden. Somit ist durch diese Ermittlung der Umlaufgeschwindigkeit auch ein kontinuierliches Überwachungsverfahren gegen unzulässige Betriebszustände oder als Hinweis auf notwendige Wartungsarbeiten möglich.

Fig. 2 zeigt die Anwendung des erfindungsgemäßen Verfahrens zum Betreiben von Förderband- bzw. Dosierbandwaagen am Beispiel einer Förderbandwaage, die in Seitenansicht dargestellt ist. Diese Förderbandwaage arbeitet im Gegensatz zu der Dosierbandwaage in Fig. 1 nach dem gravimetrischen Meßverfahren, in dem die zu dosierende Gutmenge gewichtsmäßig bestimmt wird. Hierzu ist das Förderband 1 über eine bestimmte Meßstrecke an Meßrollen 9 abgestützt, die wiederum über einen Tragrahmen 10 Kraftmeßelemente 11 belasten. Damit ist über die Ermittlung des auf den Tragrahmen 10 bzw. der Kraftmeßelemente 11 wirkenden Gewichtes und der Förderbandgeschwindigkeit eine gravimetrische Ermittlung der durchlaufenden Gutmenge möglich. An dem Förderband 1 sind Markierungen 4 in Form von Profilerhöhungen, die einstückig mit dem Förderband 4 in Form von Gumminocken ausgebildet sein können, vorgesehen. Die Markierungen 4 wirken ebenfalls mit einer ortsfest angeordneten Abtastvorrichtung 5 zusammen, die insbesondere berührungslos, z.B. nach dem magnetisch-induktiven Prinzip oder dem Hall-Effekt arbeitet.

Fig. 3 zeigt die der Fig. 2 entsprechenden Draufsicht mit den Meßrollen 9, die an dem Tragrahmen 10 angeordnet sind und auf Kraftmeßelemente 11 wirken. Anstatt der Anordnung mit das Förderband 1 abstützenden Meßrollen 9, kann als Umkehrung im Rahmen des gravimetrischen Meßprinzips auch ein den Durchhang des Förderbandes 1 bzw. dessen Spannung messendes Tastrad am unteren umlaufenden Bandtrum vorgesehen sein.

In Fig. 3 sind zudem die Markierungen 4 als Erhöhungen angedeutet, die entlang des Förderbandes in einer Linie in regelmäßigen Abständen verlaufen. Durch die Anordnung parallel zur Mittellinie 12 im Normalbetrieb, lassen sich auch Abweichungen im Geradelauf (Förderbandkante läuft senkrecht zur Walzenachse um) des Förderbandes 1 feststellen. da hierdurch die Linie der Markierungen 4 bei einem Schräglauf (oder Schieflauf) des Förderbandes 1 an der Abtastvorrichtung 5 ganz oder teilweise vorbeilaufen wie dies in übertriebener Weise durch den Schräglaufwinkel angedeutet ist.

Bei einem beginnenden Schräglauf wird somit das Abtastsignal schwächer oder verschwindet dann ganz, so daß sich ein Schräglauf des Förderbandes 1 bereits im Anfangsstadium erkennen läßt und rechtzeitig korrigieren läßt. Dies kann dadurch erfolgen. daß die Umlenkrolle 3. die hier als die rechte Walze dargestellt sein soll. um einen Schwenkpunkt 13 mittels einer Verstellvorrichtung 14. z.B. einem Hydraulikzylinder gemäß dem Pfeil verschwenkt werden kann. Damit lassen sich auch unterschiedliche Dehnungen des Förderbandes 1 z.B. der rechten Seite gegenüber der linken Seite ausgleichen und sich ein Geradlauf des Förderbandes selbst bei diesen ungünstigen Bedingungen in vorteilhafter Ausgestaltung automatisch korrigieren.

Durch das durch die Markierungen 4 ermöglichte Verfahren zur schlupffreien Erfassung der Umfangsgeschwindigkeit ist es in Weiterbildung des Verfahrens möglich. selbst Störeinflüsse eines unregelmäßig umlaufenden Förderbandes zu erfassen. Ein Förderband läßt sich nicht bzw. nur unter größtem Aufwand so herstellen, daß jede beliebige Teilstrecke jedem anderen beliebigen Teilabschnitt in Form und Gewicht exakt gleicht. Insbesondere am Stoß bzw. Überlappung der Gewebeverstärkung ist das Förderband schwerer als an den andren Stellen, so daß diese Stelle des Förderbandes beim Überlaufen der Meßrolle 9 eine höhere Gewichtsanzeige liefert und damit das Meßergebnis verfälscht. Ebenso ergeben sich herstellungsbedingt leichtere Stellen des Förderbandes. Selbst wenn diese Unterschiede im Gurteigengewicht erkannt werden. können sie als Fehlereinfluß auf die Dosierung nicht als systematischer Meßfehler korrigiert werden, da sie durch den Schlupf keiner bestimmten Walzen- oder Trommelstelle zuzuordnen sind.

Durch die schlupffreie Erfassung mittels der Markierungen 4 können nunmehr in besonders vorteilhafter Weise diese Gewichtsunterschiede oder andere Unwuchten erfaßt werden. Hierzu läuft das Förderband 1 im Leerzustand (Nullpunkt) um und die Meßrolle 9 kann die von den Gewichtsunterschieden und dgl. hervorgerufenen Nullpunktverschiebungen registrieren. Im Betrieb mit belastetem Förderband kann dann der jeweiligen, durch Markierung(en) 4 identifizierten Stelle des Förderbandes der entsprechende Plus-/Minuswert der Nullpunktverschiebung zugeordnet und vom Wiegeergebnis entsprechend subtrahiert oder addiert werden.

Selbst bei einer einzigen Markierung 4 ist dieses Korrekturverfahren möglich, da die aufgezeichnete und abgespeicherte Kurve der Massenverteilung entlang des Förderbandumfanges durch den Markierungsimpuls synchron zugeschaltet werden kann. Die Erfassung dieses Fehlereinflusses "Masseverteilung des Förderbandes" kann dabei durch die Meßrolle 9 oder auch die Antriebs- oder Umlenkrolle erfolgen. Durch die Anbringung der Markierung 4 am Förderband 1 selbst kann die Synchronität dabei nicht verlorengehen. wie dies bei Schlupf auf den Umlenkwalzen der Fall ist.

Die durch die Markierungen 4 ermöglichte schlupffreie Umfangsgeschwindigkeitsmessung erlaubt somit die Schräglauferfassung und Ermittlung der Masseverteilungskurve und somit entsprechende Korrekturverfahren. Dies wirkt sich wiederum günstig in der Verbesserung der Dosiergenauigkeit aus.

## Patentansprüche

1. Verfahren zur Überwachung und Regelung eines Banddosierers oder einer Dosierbandwaage mit einem über eine Antriebswalze (2) mit einstellbarer Drehzahl antreibbaren Förderband (1), wobei die Bandgeschwindigkeit zur Regelung eines Schüttgutstromes gemessen wird, dadurch gekennzeichnet, daß die Bandgeschwindigkeit des Förderbandes (1) unmittelbar am Förderband (1) selbst schlupffrei, an dort in gleichmäßigem Abstand vorgesehen Markierungen (4) gemessen wird und die gemessenen Werte sodann mit der eingestellten Drehzahl der Antriebswalze (2) in Beziehung gesetzt werden.

2. Verfahren nach Anspruch 1, dadurch gekennzeichnet, daß die Messung der Bandgeschwindigkeit berührungslos erfolgt.

3. Verfahren nach Anspruch 1 oder 2, dadurch gekennzeichnet, daß die gemessenen Werte der Bandgeschwindigkeit gemittelt und/oder zwischengespeichert werden.

4. Verfahren nach einem der Ansprüche 1 bis 3, dadurch gekennzeichnet, daß bei vorbestimmbaren Abweichungen zwischen gemessener und eingestellter Bandgeschwindigkeit eine Störungsanzeige bzw. Abschaltung des Förderbandes (1) erfolgt.

5. Verfahren nach einem der Ansprüche 1 bis 4, dadurch gekennzeichnet, daß bei Schräglauf des Förderbandes (1) eine Seitenverschiebung bzw. Verschwenkung wenigstens einer Umlenkwalze (3) bis zum Erreichen des Geradlaufes des Förderbandes (1) erfolgt.

6. Verfahren nach Anspruch 1, dadurch gekennzeichnet, daß im unbelasteten Zustand des Förderbandes (1) dessen jeweils während des Umlaufes auf eine Gewichtsmeßeinrichtung (Meßrolle 9) wirkendes Eigengewicht gemessen und als Korrekturwerte bzw. -kurve abgespeichert wird und im belasteten Zustand des Förderbandes (1) die Korrekturwerte bzw. - kurve dem jeweils gemessenen Meßwert der Förderbandbeladung invers überlagert wird.

7. Vorrichtung zur Durchführung des Verfahrens nach Anspruch 1, mit einem über eine Antriebswalze (2) mit einstellbarer Drehzahl antreibbaren Förderband (1), dessen Bandgeschwindigkeit erfaßt und mit einem Vergleicher (7) durch Verstellung der Drehzahl der Antriebswalze (2) geregelt wird, dadurch gekennzeichnet, daß an dem Förderband (1) in gleichmäßigem Abstand Markierungen (4) vorgesehen sind, die von einer Abtastvorrichtung (5) im Vorbeilauf des Förderbandes (1) erfaßt werden und die Abtastsignale (6) der Abtastvorrichtung (5) dem Vergleicher (7) zugeleitet werden.

8. Vorrichtung nach Anspruch 7, dadurch gekennzeichnet, daß die Markierungen (4) durch Formänderungen (Vertiefungen, Erhöhungen) des Förderbandes (1) gebildet sind.

9. Vorrichtung nach Anspruch 7, dadurch gekennzeichnet, daß die Markierungen (4) durch magnetisch ansprechende Teile innerhalb des Förderbandes (1) gebildet sind.

10. Vorrichtung nach einem der Ansprüche 7 bis 9, dadurch gekennzeichnet, daß die Markierungen (4) parallel zur Haupterstreckungsrichtung des Förderbandes (1) angeordnet sind.

11. Vorrichtung nach Anspruch 10, dadurch gekennzeichnet, daß bei seitlicher Abweichung der umlaufenden Markierungen (4) von der Abtastvorrichtung (5) eine auf die Umlenkwalze (3) wirkende Verstellvorrichtung (14) betätigbar ist.

## Claims

1. Process for checking and controlling a conveyer belt feeder or a conveyer belt weight feeder comprising a conveyer belt (1) driven via a driving roller (2) with an adjustable number of revolutions, wherein the belt velocity is measured for controlling a stream of bulk material,
characterized in that
the belt velocity of the conveyer belt (1) is measured directly and slippage-free at the conveyer belt (1) itself at marks (4) provided thereat in uniform intervals, and then the measured values are set in relation to the adjusted number of revolutions of the driving roller (2).

2. Process according to claim 1, characterized in that the measuring of the belt velocity is performed without contact.

3. Process according to claim 1 or 2, characterized in that the measured values of the belt velocity are averaged and/or intermediately stored.

4. Process according to any of claims 1 to 3, characterized in that a fault display or a stop of the conveyer belt (1) is performed on predetermined deviations of measured and adjusted belt velocities.

5. Process according to any of claims 1 to 4, characterized in that in case of a sloping circulation of the conveyer belt (1) a lateral movement or pivoting of at least one pulley (3) is performed until an aligned circulation of the conveyer belt (1) is achieved.

6. Process according to claim 1, characterized in that the inherent weight of the conveyer belt (1) is measured in its non-loaded condition during circulation, which weight is acting on a weight measuring device (roller 9), and is stored as correction values or correction graph,
respectively, and that the correction values or correction graph, respectively, are inversely superposed to the instant measuring value of the conveyer belt load in loaded condition of the conveyer belt (1).

7. Apparatus for performing the process according to claim 1, comprising a conveyer belt (1) driven via a driving roller (2) with an adjustable number of revolutions, wherein the belt velocity is detected and controlled by a comparator (7) by adjusting the number of revolutions of the driving roller (2),
characterized in that
marks (4) are provided at the conveyer belt (1) in a uniform interval, the marks (4) being detected by a detecting device (5) on the travelling of the conveyer belt (1), and the detection signals (6) of the detecting device (5) are input to the comparator (7).

8. Apparatus according to claim 7, characterized in that the marks (4) are formed as shape variations (recesses, elevations) of the conveyer belt (1).

9. Apparatus according to claim 7, characterized in that the marks (4) are formed as magnetically responsive particles within the conveyer belt (1).

10. Apparatus according to any of claims 7 to 9, characterized in that the marks (4) are arranged in parallel to the main direction of the conveyer belt (1).

11. Apparatus according to claim 10, characterized in that an adjustment device (14) acting on the pulley (3) may be actuated on lateral sloping of the circulating marks (4) with respect to the detecting device (5).

## Revendications

1. Procédé pour le contrôle et le réglage d'un doseur à bande ou d'une balance de dosage à bande présentant une bande convoyeuse (1) pouvant être menée, avec vitesse angulaire réglable, par l'intermédiaire d'un cylindre d'entrainement (2), la vitesse de la bande étant mesurée pour réguler un flux de matière en vrac, caractérisé par le fait que la vitesse de la bande convoyeuse (1) est directement mesurée sur la bande convoyeuse (1) proprement dite, sans aucun patinage, à repères (4), y prévus à intervalles réguliers après quoi les valeurs mesurées sont mises en relation avec la vitesse angulaire réglée du cylindre d'entrainement (2).

2. Procédé selon la revendication 1, caractérisé par le fait que le mesurage de la vitesse de la bande s'opère sans contact.

3. Procédé selon la revendication 1 ou 2, caractérisé par le fait que les valeurs mesurées de la vitesse de la bande sont moyennées et/ou mémorisées provisoirement.

4. Procédé selon l'une des revendications 1 à 3, caractérisé par le fait qu'un affichage de perturbation ou une mise à l'arrêt de la bande convoyeuse (1) s'opère respectivement en présence d'écarts, pouvant être prédéterminés, entre les vitesses mesurée et réglée de la bande.

5. Procédé selon l'une des revendications 1 à 4, caractérisé par le fait que, lors d'un défilement oblique de la bande convoyeuse (1), un coulissement latéral ou un pivotement d'au moins un cylindre de renvoi (3) s'opère respectivement jusqu'à ce que le défilement rectiligne de la bande convoyeuse (1) soit atteint.

6. Procédé selon la revendication 1, caractérisé par le fait que, à l'état soulagé de la bande convoyeuse (1), le poids propre de cette dernière, agissant respectivement au cours de la révolution sur un dispositif mesureur de poids (rouleau mesureur 9), est mesuré et respectivement mémorisé sous la forme de valeurs ou d'une courbe de correction et, à l'état chargé de la bande convoyeuse (1), les valeurs ou la courbe de correction est (sont) respectivement superposée(s) à l'inverse de la valeur mesurée du chargement de la bande convoyeuse.

7. Dispositif pour la mise en oeuvre du procédé selon la revendication 1, présentant une bande convoyeuse (1) qui peut être menée, avec vitesse angulaire réglable, par l'intermédiaire d'un cylindre d'entraînement (2), et dont la vitesse est détectée et est réglée à l'aide d'un comparateur (7), par modification de la vitesse angulaire du cylindre d'entraînement (2), caractérisé par le fait que des repères (4), prévus à intervalles réguliers sur la bande convoyeuse (1), sont détectés par un dispositif d'exploration (5) lors du passage en regard de la bande convoyeuse (1), puis les signaux de balayage (6) du dispositif d'exploration (5) sont appliqués au comparateur (7).

8. Dispositif selon la revendication 7, caractérisé par le fait que les repères (4) sont constitués par des déformations (creusures, protubérances) de la bande convoyeuse (1).

9. Dispositif selon la revendication 7, caractérisé par le fait que les repères (4) sont formés par des parties réagissant magnétiquement à l'intérieur de la bande convoyeuse (1).

10. Dispositif selon l'une des revendications 7 à 9, caractérisé par le fait que les repères (4) sont agencés parallèlement à la direction principale de l'étendue de la bande convoyeuse (1).

11. Dispositif selon la revendication 10, caractérisé par le fait qu'un dispositif de réglage (14), agissant sur le cylindre de renvoi (3), peut être actionné lorsque les repères (4) en défilement accusent un écart latéral par rapport au dispositif d'exploration (5).
